# EUROPEAN PATENT APPLICATION

(11) **EP 3 163 847 A1**
(43) Date of publication of application: **03.05.2017**
(21) Application number: 16194138.0
(22) Date of filing: 17.10.2016
(51) Int. Cl.: H04M 1/02, G02B 6/00

(54) **OUTDOOR STATION FOR AN AUDIO AND/OR VIDEO INTERCOMMUNICATION SYSTEM**

(30) Priority: 27.10.2015 BE 201505692
(71) Applicant: Niko NV, 9100 Sint-Niklaas (BE)
(72) Inventor: Van Ranst, Jurgen, 9040 Gent (BE); De Mey, Jens, 9240 Zele (BE); Vanisterdael, Koen, 2018 Antwerpen (BE)
(74) Representative: D'Halleweyn, Nele Veerle Trees Gertrudis

(57) **Abstract**

The present invention provides an outdoor station (1) for an audio and/or video intercommunication system. The outdoor station (1) comprises a front plate (2) comprising an input interface (3) with integrated touch area (4), lighting means (8) for illuminating the input interface (3), a light guide (9) for guiding the light from the lighting means (8) to the input interface (3), and control means (10) for controlling the lighting means (8) such that, during use of the outdoor station (1), the lighting means (8) is always on and goes out for a predefined period of time when a user pushes or touches the integrated touch area (4) on the input interface (3). In an outdoor station (1) according to embodiments of the invention, even there is no physical touch area, the location to push or touch for making a call or for entering a code, or make any other action so as to enter a building, is always clear and easy to find, even in low ambient light conditions or in the absence of light.

## Description

### Technical field of the invention

The present invention relates to an outdoor station for an audio and/or video intercommunication system. More particularly, the present invention relates to such outdoor station with an illuminated input interface.

### Background of the invention

Outdoor stations are devices that are mounted, for example, to a façade of a residence. They are connected to an indoor station that communicates with the outdoor station. When a visitor or user pushes a bell button on the door station, the indoor station which may, for example, be a tablet, smartphone, wall-mounted touch screen or the like, receives a call that can be answered by the indoor user. The indoor user can communicate with the outdoor user, with or without a video feed of the outdoor user.

Clean and straight designed outdoor stations may no longer comprise a physical bell button. In other words, the bell button may be integrated in the input interface. Such designs have as a drawback that, in situations with low ambient light, the bell button may be difficult to identify because there is no typical physical button.

### Summary of the invention

It is an object of embodiments of the present invention to provide an outdoor station with an illuminated input interface for an audio and/or video intercommunication system.

The above objective is accomplished by a device according to embodiments of the present invention.

The present invention provides an outdoor station for an audio and/or video intercommunication system. The door station comprises a front plate comprising an input interface with integrated touch area, lighting means for illuminating the input interface and a light guide for guiding the light from the lighting means to the input interface. The outdoor station furthermore comprises control means, e.g. a light control printed circuit board assembly (light control PCBA), for controlling the lighting means such that, during use of the outdoor station, the lighting means is always on and goes out for a predefined period of time when a user pushes the touch area of the input interface.

An advantage of an outdoor station according to embodiments of the invention is that, even there is no physical touch area, such as a physical bell button or physical buttons on a keypad, the location to push or touch for making a call or entering a code or make any other action so as to enter a building, is clear and easy to find in low ambient light conditions or even in the absence of light. According to embodiments of the invention, the input interface with integrated touch area may be a name tag with integrated bell button for initiation a call or may be a keypad with integrated buttons for entering a code to open a door of a building to receive access to that building.

According to embodiments of the invention, the light guide may comprise a switch element, such as for example a capacitive switch element, a piezo element or an inductive switch element, for transferring a signal to the control means when a user pushes or touches the touch area on the input interface. Preferably, the switch element may be a piezo element.

This has as an advantage that it makes the outdoor station robust as it does not have any moving parts. Furthermore, because the switch element is located at the light guide, the outdoor station can be closed in a waterproof and dustproof way, such that no water or dust can reach the switch element or any other part of the outdoor station.

The input interface may be located in an input interface cavity in the front plate. The input interface cavity may have a border with opaque upstanding edges and the light guide may comprise a protruding part fitting into and being slightly smaller than the input interface cavity in the front plate. The input interface can be placed in the input interface cavity thereby leaning on the upstanding edges. This avoids light leakage through the edges/borders of the input interface.

The front plate may, according to embodiments of the invention, have a front side and the protrusion on the light guide does not extend beyond the front side of the front plate. Also when the input interface is located in the input interface cavity, this input interface does not extend beyond the front side of the front plate. This gives the outdoor station a clean and straight design with no protruding parts at the front side.

Further, the input interface may have a colourless transparent front side and a back side. The back side may be covered with an opaque black layer in which items such as for example names, numbers and/or symbols can be engraved. This has as an advantage that, whatever is engraved in the input interface, e.g. a bell icon and/or the name of the resident and/or numbers to enter a code, is always lit, while the rest of the input interface remains unlit. This makes the bell icon, numbers and/or the name, or whatever else is engraved in the input interface, clearly visible to a user. According to embodiments of the invention, at least a back side of the light guide may be provided with a white light diffusing layer. The light diffusing layer does not necessarily have to be a layer fully covering the back side of the light guide, it may also be a patterned layer only covering part of the back side of the light guide. This makes sure that the front side lights up evenly and optimises the light output. According to further embodiments of the invention, also a part of the front side of the light guide different from the protruding part may be provided with a white light diffusing layer. This may light up the front side even more evenly and further optimises the light output.

The outdoor station may furthermore comprise a sealing provided in between the light guide and the front plate for waterproof and dustproof fixing the light guide to the front plate. The sealing may, for example, be a double sided tape or a foam. At least a back side of the sealing may have a white light reflecting surface. This minimizes light loss and maximizes brightness of the front surface of the light guide.

According to embodiments of the invention, the lighting means may be provided on a back side of the control means. The location of the lighting means may, for example, depend on the kind of input interface that is provided.

According to specific embodiments of the invention, the lighting means may comprise LED lights, or may comprise an electroluminescence type of lighting.

According to particular embodiments wherein the lighting means comprises LED lights, the lighting means may be located on the back side of the control means such that it is located at at least one of a top side, a lower side or a side flank of the light guide. According to other embodiments, wherein the lighting means comprises an electroluminescence type of lighting, an electroluminescence plate may be provided which will illuminate the full back side of the light guide.

The input interface, light guide and control means may, when assembled, have a total thickness of between 1.5 mm and 25 mm, more particular between 1,9 mm and 15 mm, and may for example be 5,9 mm.

### Brief description of the drawings

It has to be noted that same reference signs in the different figures refer to same, similar or analogous elements.
Fig. 1 schematically illustrates an exploded perspective view looking from the front to the back of an outdoor station according to embodiments of the invention.
Fig. 2 schematically illustrates an input interface that can be used with an outdoor station according to an embodiment of the invention
Fig. 3A and 3B schematically illustrate an assembled state as seen from the backside (Fig. 3A) and an exploded perspective view looking from the back to the front (Fig. 3B) of an outdoor station according to an embodiment of the invention.
Fig. 4A to 4C schematically illustrate details of a light guide (Fig. 4A), a lighting means and a control means separately (Fig. 4B) and a lighting means and a control means assembled together (Fig. 4C) of an outdoor station according to embodiments of the invention.
Fig. 5 schematically illustrates a control means, a light guide and an input interface of an outdoor station according to embodiments of the invention in an assembled state.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

The present invention provides an outdoor station for an audio and/or video intercommunication system. The outdoor station comprises a front plate comprising an input interface with integrated touch area, lighting means for illuminating the input interface, and a light guide for guiding the light from the lighting means to the input interface. The outdoor station furthermore comprises control means for controlling the lighting means such that, during use of the door station, the lighting means is always on and goes out for a predefined period of time when a user pushes or touches the touch area on the input interface.

An advantage of an outdoor station according to embodiments of the invention is that, even there is no physical touch area, such as, for example a physical bell button or physical buttons for entering a code, etc., the location to touch or push for making a call or entering a code or make any other action so as to enter a building, is always clear and easy to find, even in low ambient light conditions or in the absence of light.

The present invention will hereinafter be described by means of different embodiments. It has to be understood that these embodiments are only for the ease of understanding the invention and are not intended to limit the invention in any way.

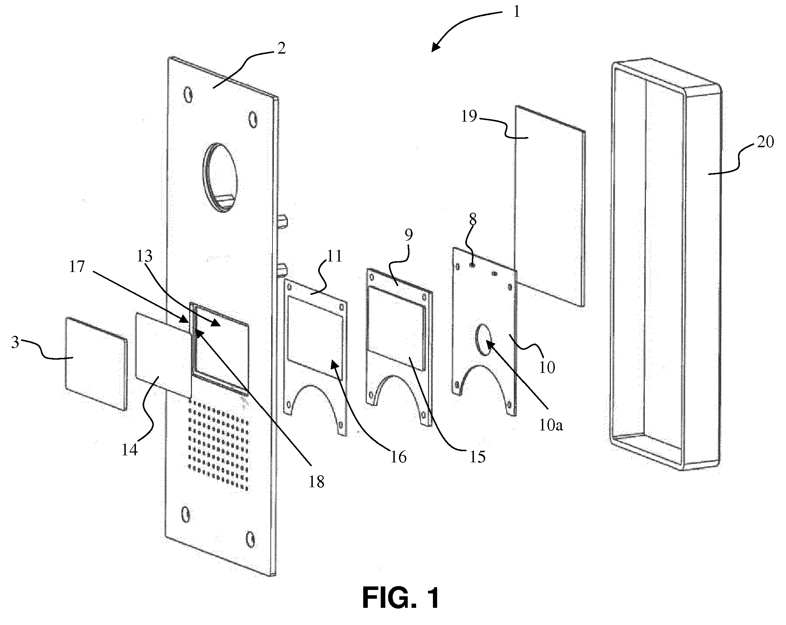

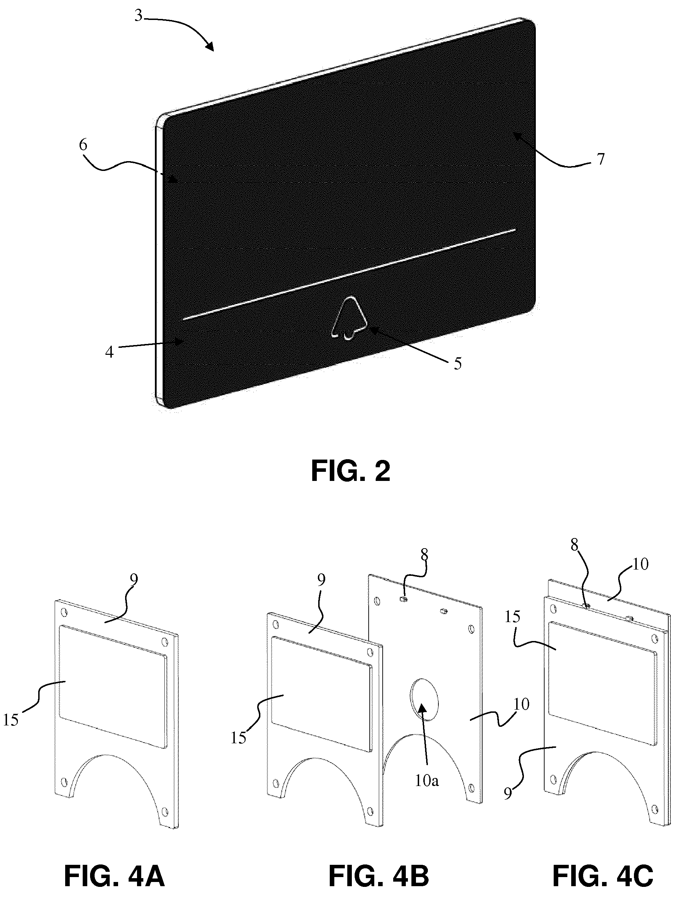

Fig. 1 illustrates an outdoor station 1 according to an embodiment of the invention. The outdoor station 1 comprises a front plate 2 with an input interface 3 with integrated touch area 4 (see Fig. 2). With integrated touch area is meant that the outdoor station 1 does not have a separate, physical touch area. This gives the outdoor station 1 a clean and straight design. According to embodiments of the invention, the input interface 3 may, for example, be a name tag with integrated bell button for initiation a call or may be a keypad for entering a code. Hence, the input interface has as a goal that as a result of interaction of a user with the input interface, access to a building can be obtained. In case of the input interface being a name tag with an integrated bell button, a call is initiated when a user pushes or touches the touch area and a person inside the building can open the door. In case the input interface is a keypad with integrated touch buttons for entering a code, the door can be opened when a correct code is entered.

In the further description of the embodiments the input interface will be described and shown as a name tag with integrated bell button 4, and will for that reason in the description also be referred to as a name tag 3. However, it has to be understood that the principles are evenly applicable to any other suitable input interface with any suitable touch area as known by a person skilled in the art such as, for example, a keypad for entering a code for receiving access to a building.

A detail of the name tag 3 is illustrated in Fig. 2. The name tag 3 has an integrated bell button 4. When a user, e.g. a visitor, touches the bell button, e.g. indicated by a bell icon 5 on that bell button 4, the call will be initiated (see further).

Preferably, the name tag 3 may have a colourless, transparent front side 6 and a back side 7 which is covered with an opaque layer. In the opaque layer, items can be engraved such as for example, the bell icon 5 and/or the name(s) of the resident(s) (not shown) in case of the name tag 3 of the current embodiment or numbers in case of a keypad. According to embodiments of the invention, the opaque layer may be a composite layer of a transparent layer and an opaque layer. For example, the opaque layer may be a co-extrusion of a transparent PMMA layer and an opaque PMMA layer. More in general, the composite layer may comprise a synthetic polymer layer or a glass layer and an opaque paint or metal layer. The composite layer may comprise any combination of a transparent material layer and a layer that blocks the light and in which items can be engraved. According to further embodiments of the invention, the composite layer may also comprise a transparent layer which is covered with a black layer which is, for example, printed on the transparent layer.

Although it is said that items are engraved into the opaque layer on the backside of the name tag 3, it has to be understood that any other suitable method for locally removing material from a layer as known by a person skilled in the art may also be used for providing items such as e.g. a bell icon 5 and/or the name(s) of residents and/or numbers on the name tag, such as, for example, etching or milling.

Because the bell button 4 is integrated in the name tag 3, in a situation of low ambient light or in the absence of light there can be a problem to identify the bell 4 button since the front plate 2 is flat and there is no typical physical bell button present on the front plate 2. Therefore, according to the present invention, the outdoor station 1 furthermore comprises lighting means 8 for illuminating the name tag 3, a light guide 9 and control means 10 for controlling the lighting means 8 such that, during use of the outdoor station 1, the lighting means 8 is always on and goes out for a predefined period of time when a call is initiated when a user touches or pushes the bell button 4 on the name tag 3 and thereby initiates a signal.

An advantage of the above is that the items that are engraved, e.g. the bell icon 5 and/or the name(s) of the resident(s), in the name tag 3 will be lit as long as no users are touching or pushing the bell button 4, while the rest of the name tag 3 remains unlit. This makes the bell icon 5 and the name(s), or any other item that is engraved in the opaque layer clearly visible to the user.

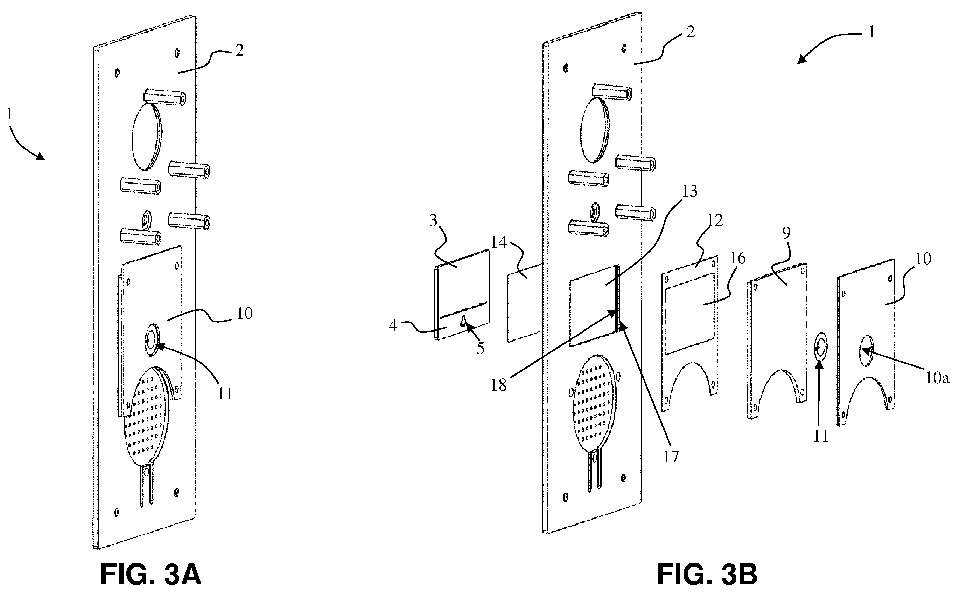

The light guide 9 may comprise a switch element 11 for transferring that signal to the control means 10. The switch element 11 can, for example, be a capacitive switch element, a piezo switch element or an inductive switch element. This is illustrated in Figs. 3A and 3B which respectively show an assembled state and an exploded perspective view looking from the back to the front of an outdoor station 1 according to an embodiment of the invention. The switch element 11 is provided at a backside of the light guide 9 and may be fixed to the light guide 9 by means of, for example, glue. Because the switch element 11 is provided at a backside of the light guide 9, an opening 10a is provided in the control means 10, for properly positioning the switch element 11. When the user touches or pushes the name tag 3, the signal generated by such touching or pushing action will be transferred by the switch element 11 to the control means 10. More particular, in case of the switch element 11 being a piezo switch element as is illustrated in the drawings, the pressure or vibration of such touching or pushing action will induce an electrical charge in the piezo element that is converted into a call notification by the control means.

According to embodiments of the invention, the lighting means 8 may comprise LED lights or may comprise an electroluminescence type of lighting. In case of the lighting means 8 comprising LED lights, these LED lights 8 may be provided on the control means 10 such that it is located at at least one of a top side, a lower side or a side flank of the light guide 9. The location of the LED lights 8 may, for example, depend on the number of name tags 3 that are provided. For example, there may be provided one name tag 3, two name tags 3 or any other suitable number of name tags 3 as required for a particular application. In case of one name tag 3 being present, the lighting means 8 may, for example but not limited to, be located at a top side of the light guide 9 while in case of two or more name tags 3 being present, the lighting means 8 may, for example but not limited to, be located at a side flank of the light guide 9. In case the lighting means 8 comprises an electroluminescence plate, this electroluminescence plate 8 may be provided such that it illuminates the full back side of the light guide 9.

Hence, in any case the lighting of the name tag 3 is realized by the light guide 9. This means that in any case the lighting means 8 is illuminating the light guide 9 and the light guide 9 makes sure that the light finally reaches the name tag 3. Figs. 4A to 4C schematically show details of respectively the light guide 9 (Fig. 4A), the light guide 9 and the control means 10 separately (Fig. 4B) and the light guide 9 and the control means 10 fixed to each other. The light guide 9 may be fixed to the control means 10 by means of screws.

In the example illustrated in Fig. 1 and Figs. 4A to 4C, the lighting means comprises LED lights 8 which are provided on the control means 10 such that it is located at the top side of the light guide 9. Hence, in the example given, the entire light guide 9 is lit by LED lights 8 that are provided on the control means 10.

The back surface of the light guide 9, i.e. the surface of the light guide 9 furthest away from the name tag 3, may be provided with a white layer that diffuses the light, which makes the front side of the light guide 9 light up evenly and optimises the light output. According to embodiments of the invention, also the front side of the light guide 9 may be provided with a white light diffusing layer. This, of course, makes the front side of the light guide 9 light up even more evenly and further optimises the light output.

The name tag 3 may be fixed to the front plate 2 by means of a sealing 12, such as for example a double sided tape or a foam, or any other suitable squeezable or compressible material, such as for example a thermoplastic elastomer (TPE), rubber or other synthetic materials having the same properties as rubber such as e.g. neoprene or silicone. In any case, the sealing 12 should be such that it provides the outdoor station 1 to be waterproof and dustproof, i.e. that no water and/or dust can enter the inside of the outdoor station 1. Thus, the sealing 12 provides a waterproof and dustproof fixing between the front plate 2 and the name tag 3. Further, a back side of the sealing 12, i.e. the side of the sealing 12 facing the light guide 9, may have a white surface for light reflection so as to minimize light loss and maximize brightness of the front surface of the light guide 9. The name tag 3 may be located in a name tag cavity 13 in the front plate 2. The name tag 3 may be fixed to the light guide 9 via fixing means 14, which may for example be a repositionable tape 14. With repositionable tape is meant that the tape can be replaced whenever this may be necessary, for example when names on the name tag 3 should be changed, added and/or removed. The repositionable tape 14 may, for example, be a double-sided tape with a carrier. The carrier may, for example, be a diffuser film so as to make the light coming from the lighting means 8 even more uniform. The light guide 9 has a protruding part 15 onto which the name tag 3 may be fixed. The protruding part 15 fits into an opening 16 in the sealing 12 and fits into the name tag cavity 13 in the front plate 2. The name tag cavity 13 is slightly larger than the protruding part 15 of the light guide 9. The borders 17 of the name tag cavity 13 may have upstanding edges 18 which may be made of an opaque material, such as for example aluminium. The combination of the name tag cavity 13 being slightly larger than the protruding part 15 of the light guide 9 and the upstanding edges 18 of the border 17 of the name tag cavity 13 being made of an opaque material makes sure that light cannot leak through the edges between the protruding part 15 of the light guide 9 and the name tag cavity 13 in the front plate 2.

The outdoor station 1 may furthermore comprise a printed circuit board 19 comprising further electronics necessary for making the outdoor station 1 work and a back cover 20 for closing the outdoor station 1 at the back for preventing, for example, dirt and water to enter the outdoor station 1 from the back side.

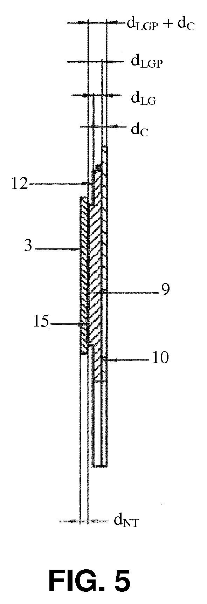

The name tag 3, or in general the input interface, the light guide 9 and the control means 10 may, when assembled, have a total thickness of between 1.5 mm and 25 mm and may, for example, be between 1.9 mm and 15 mm. According to a specific embodiment, the name tag 3, light guide 9 and control means 10 may, when assembled, have a total thickness of 5.9 mm. Fig. 5 illustrates a specific example of how thin and flat an outdoor station 1 according to embodiments of the invention can be. For example, the control means 10 may have a thickness d_{C} of 1 mm, the light guide 9 without the protrusion 15 may have a thickness d_{LG} of 2 mm and the light guide 9 together with the protrusion 15 may have a thickness d_{LGP} of 3.3 mm. Hence, the thickness d_{LGP} + d_{C} of the light guide 9 with protrusion 15 and the control means 10 may, in the example given, be 4.3 mm. The thickness d_{NT} of the name tag 3 may be 1.6 mm. Hence, in the example given in Fig. 5, the total thickness of the outdoor station 1 without the PCB 19 with electronics and the back cover 20 may be 5.9 mm. It has to be understood that this example is only meant to be an illustration of how thin an outdoor station 1 according to embodiments of the invention can be, but is in no way intended to limit the invention in any way.

The example illustrated above and in the drawings is an outdoor station 1 with one name tag 3. However, it has to be understood that this is not intending to limit the invention in any way. The outdoor station 1 may have any number of name tags 3 as required for a particular application. Furthermore, as already mentioned above, according to further embodiments, the input interface with integrated touch area can, instead of a name tag 3 with an integrated bell button 4, also be a keypad with integrated buttons for entering a code for receiving access to a building. The keypad and integrated buttons may have similar properties and may be illuminated in a same way as described for the name tag 3 with integrated bell button 4. For example, the lighting means 8 may always be on and when a user has entered a code by pushing the numbers on the keypad, the light may go out for a predefined period of time.

## Claims

1. Outdoor station (1) for an audio and/or video intercommunication system, the outdoor station (1) comprising:
- a front plate (2) comprising an input interface (3) with integrated touch area (4),
- lighting means (8) for illuminating the input interface (3),
- a light guide (9) for guiding the light from the lighting means (8) to the input interface (3), and
- control means (10) for controlling the lighting means (8) such that, during use of the outdoor station (1), the lighting means (8) is always on and goes out for a predefined period of time when a user pushes or touches the touch area (4) on the input interface (3).

2. Outdoor station (1) according to claim 1, wherein the light guide (9) comprises a switch element (11) for transferring a signal to the control means (10) when a user pushes or touches the touch area (4) on the input interface (3).

3. Outdoor station (1) according to claim 2, wherein the switch element (11) is a capacitive switch element, a piezo element or an inductive switch element.

4. Outdoor station (1) according to any of the previous claims, the input interface (3) being located in a input interface cavity (13) in the front plate (2), wherein the input interface cavity (13) has borders (17) with opaque upstanding edges (18) and the light guide (9) comprises a protruding part (15) fitting into and being slightly smaller than the input interface cavity (13) in the front plate (2).

5. Outdoor station (1) according to claim 4, the front plate (2) having a front side, wherein the protruding part (15) of the light guide (9) does not extend beyond the front side of the front plate (2).

6. Outdoor station (1) according to any of the previous claims, the front plate (2) having a front side, wherein the input interface (3) does not extend beyond the front side of the front plate (2).

7. Outdoor station (1) according to any of the previous claims, wherein the input interface (3) has a colourless transparent front side (6) and has a back side (7) that is covered with an opaque layer in which items (5) can be engraved.

8. Outdoor station (1) according to any of the previous claims, wherein at least a back side of the light guide (9) is provided with a white light diffusing layer.

9. Outdoor station (1) according to any of the previous claims, wherein a sealing (12) is provided in between the light guide (9) and the front plate (2) for waterproof and dustproof fixing the light guide (9) to the front plate (2).

10. Outdoor station (1) according to claim 9, wherein a back side of the sealing (12) has a white light reflecting surface.

11. Outdoor station (1) according to any of the previous claims, wherein the lighting means (8) comprises LED lights.

12. Outdoor station (1) according to claim 11, wherein the lighting means (8) is provided on the control means (10) such that it is located at at least one of a top side, a lower side or a side flank of the light guide (9).

13. Outdoor station (1) according to any of the previous claims, wherein the input interface (3), light guide (9) and control means (10), when assembled, have a total thickness of between 1.5 mm and 25 mm.

14. Outdoor station (1) according to any of the previous claims, wherein the input interface (3) is a name tag or a keypad for entering a code to receive access to a building.

15. Outdoor station (1) according to claim 14, wherein the integrated touch area (4) comprises an integrated bell button for initiating a call or integrated buttons for entering a code.
